Europäisches Patentamt

(19) European Patent Office

Office européen des brevets

(11) Veröffentlichungsnummer: **0 069 860**

A1

(12) **EUROPÄISCHE PATENTANMELDUNG**

(21) Anmeldenummer: 82104968.1

(22) Anmeldetag: 07.06.82

(51) Int. Cl.³: **H 04 H 1/00**
H 04 L 5/12, H 04 L 27/22

(30) Priorität: 01.07.81 DE 3125894

(43) Veröffentlichungstag der Anmeldung:
19.01.83 Patentblatt 83/3

(84) Benannte Vertragsstaaten:
AT BE CH DE FR GB IT LI LU NL SE

(71) Anmelder: Licentia Patent-Verwaltungs-GmbH
Theodor-Stern-Kai 1
D-6000 Frankfurt/Main 70(DE)

(72) Erfinder: Klank, Otto
Allensteiner Strasse 12
D-3160 Lehrte-Arpke(DE)

(72) Erfinder: Rottmann, Dieter, Dipl.-Ing.
Grenzstrasse 2a
D-3000 Hannover 61(DE)

(74) Vertreter: Einsel, Robert, Dipl.-Ing.
Theodor-Stern-Kai 1
D-6000 Frankfurt/Main 70(DE)

(54) Digitales Signalübertragungssystem, insbesondere für Satelliten-Rundfunk.

(57) Bei einem digitalen Signalübertragungssystem mit sequentieller Übertragung verschiedener Programme innerhalb eines Rahmens, z.B. für den Satelliten-Rundfunk, muß der Beginn eines Rahmens durch ein Synchronwort gekennzeichnet werden. Erfindungsgemäß wird das aus $2 \cdot 2^{n+1}$ bestehende Synchronwort je zur Hälfte in zwei simultanen Übertragungskanälen (A, B) übertragen. Durch spezielle Auswert-Kriterien ergibt sich auf der Empfängerseite (E) eine einfache Schaltung zur Erkennung des Synchronwortes.

Fig. 3

Licentia Patent-Verwaltungs-GmbH
Theodor-Stern-Kai 1, 6000 Frankfurt (Main) 70

Hannover,den 30.06.1981
Z13 PTL-H Wö/vß H 81/48

Digitales Signalübertragungssystem, insbesondere für Satelli-ten-Rundfunk

Beim Satelliten-Rundfunk ist es bekannt, über einen Übertragungsweg eine Vielzahl von verschiedenen Programmen zu übertragen, die auf der Empfängerseite dann wahlweise selektiv ausgewählt werden können. Diese Übertragung erfolgt z.B. im Zeitmultiplex. Dabei werden jeweils innerhalb eines sogenannten Rahmens, d.h. einer definierten Zeitperiode, zeitlich nacheinander Bitwörter für den linken Kanal des ersten Programms, den rechten Kanal des ersten Programms, den linken Kanal des zweiten Programms, den rechten Kanal des zweiten Programms, den linken Kanal des dritten Programms usw. übertragen. Nach Ablauf eines solchen Rahmens beginnt die sequentielle Übertragung wieder erneut mit dem linken Kanal des ersten Programms usw..

Auf der Empfängerseite ist dann ein sogenannter Demultiplexer notwendig, um die Programmwahl zu ermöglichen, d.h. aus einem Daten-Multiplex-Signal ein Teilsignal, nämlich das gewünschte Programm, herauszufinden. Diese Programmwahl wird z.B. durch Eingabe der Programmnummer über einen Drehschalter oder ein Tastenfeld eingegeben.

Hierbei ist es bekannt, "Elektronische Nachrichtentechnik"
Band 44, Nummer 4, 1969, Seite 316-325, einen definierten
Punkt eines derartigen Rahmens durch ein Rahmen-Synchronwort
festzulegen und die Auswertung des Rahmen-Synchronwortes durch
ein gleichstelliges Schieberegister vorzunehmen.

Daraus kann dann innerhalb eines Rahmens die dem gewünschten
Programm zugeordnete Datenfolge zeitselektiv ausgewertet werden. Aus dem Synchronwort wird also ein Rahmentakt angeleitet,
aus dem der gewünschte Programm-Zeitschlitz ausgewählt werden
kann.

Der Erfindung liegt die Aufgabe zugrunde, ein Synchronwort
anzugeben, das einerseits eine ausreichend störfreie Erkennung
und andererseits einen geringen technischen Schaltungsaufwand
auf der Empfängerseite ermöglicht.

Diese Aufgabe wird durch die im Anspruch 1 beschriebene Erfindung gelöst. Vorteilhafte Weiterbildungen der Erfindung
sind in den Unteransprüchen beschrieben.

Die erfindungsgemäße Lösung benötigt jeweils für die beiden
Synchronworthälften nur insgesamt $2 \cdot 2^n$ Bit. Durch den speziellen
Aufbau des Synchronwortes und die dadurch bedingten Auswert-
Kriterien auf der Empfängerseite ergibt sich eine ausreichend
störungsfreie Erkennung des Synchronwortes. Diese Störsicherheit wird insbesondere auch dadurch erreicht, daß gleichzeitig
auf zwei Übertragungskanälen jeweils dieselbe Synchronworthälften gesendet werden und nur bei Vorliegen derselben Kriterien in beiden Kanälen die Anwesenheit eines Synchronwortes
festgestellt wird. Der Aufbau des Synchronwortes ermöglicht
auf der Empfängerseite eine relativ einfache Schaltung. Diese
kann im wesentlichen mit Flip-Flops, einfachen Gattern und
einem (n+1)-stufigen Binärzähler realisiert werden.

Ein Ausführungsbeispiel der Erfindung wird anhand der Zeichnung erläutert. Darin zeigen:

Fig. 1 im Prinzip den Aufbau des erfindungsgemäßen Synchronwortes,

Fig. 2 die verschiedenen Möglichkeiten der Signalfolge in den
        Synchronworthälften auf der Empfängerseite,

Fig. 3 im Prinzip die verschiedenen Auswert-Kriterien und

Fig. 4 ein Schaltungsbeispiel für die Auswertung des erfindungsgemäßen Synchronwortes.


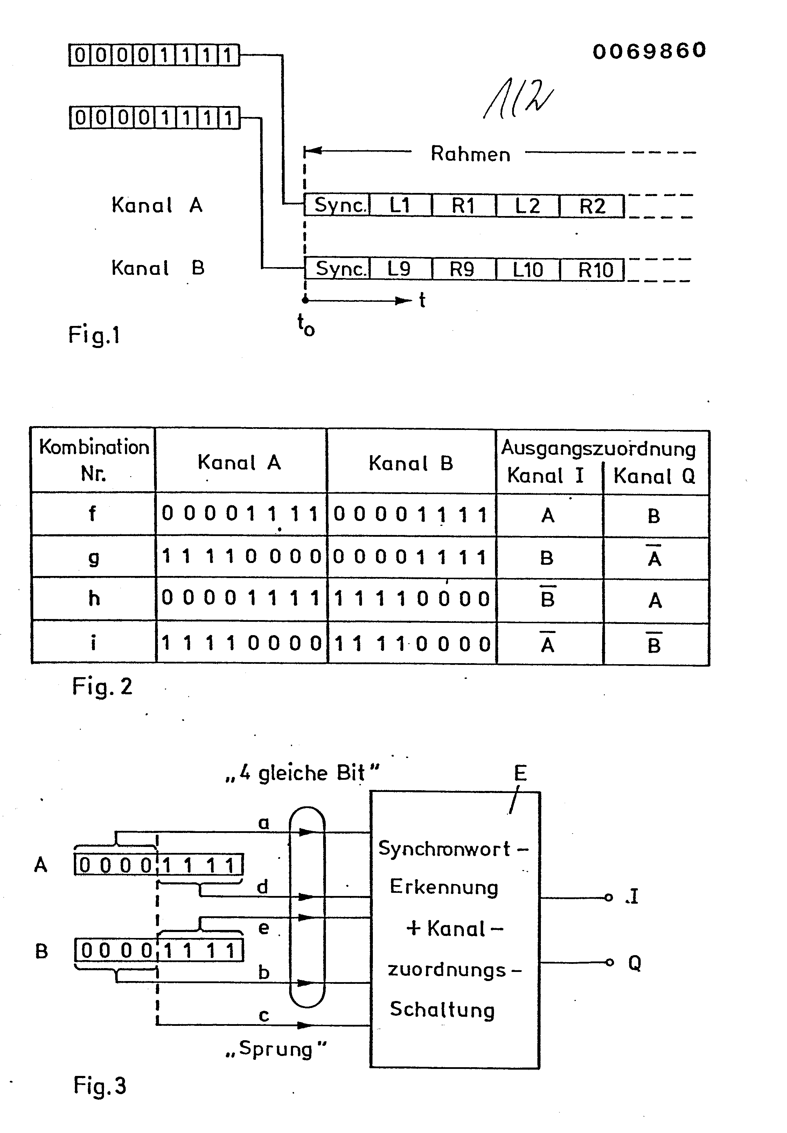

Gemäß Fig. 1 beginnt in dem Übertragungskanal A im Zeitpunkt
$t_o$ die Übertragung eines sogenannten Rahmens. Zu Beginn des
Rahmens wird zunächst ein Synchronhalbwort übertragen. Darauf
folgt ein Bitwort für den linken Kanal L1 eines Programms 1,
darauf ein Bitwort R1 für den rechten Kanal R1 des Programms 1,
dann ein Bitwort · für den linken Kanal L2 eines Programms 2
usw. bis zum rechten Kanal R8 eines Programms 8. Darüberhinaus können noch weitere Bitwörter zur Fehlerkorrektur, Ergänzungs-Bitwörter und Bitwörter für sonstige Zusatzinformationen
übertragen werden. Nach Übertragung des Bitwortes    für R8
beginnt dann die Übertragung wieder mit dem Synchronhalbwort
des Kanals A und einem weiteren Bitwort L1 des Programms 1.
Im Kanal B werden gleichzeitig entsprechend die Stereosignale
für Programm 9-16 übertragen. Zu Beginn eines Rahmens wird in
beiden Kanälen A und B dasselbe Synchronhalbwort mit dem Aufbau 00001111 übertragen, das somit aus acht Bit besteht.


Fig. 2 zeigt die vier insgesamt möglichen Kombinationen, die
bei der 4-PSK-Modulation entstehen können. Die beiden Bitwörter können gemäß Fig. 1 auf der Empfängerseite eintreffen.
Eine Polaritätsänderung in den Bitwörtern kann im Übertragungsweg entstehen. Die dargestellten Bitwörter gemäß den Kombinationen f,g,h,i müssen jeweils unabhängig von ihrem Aufbau als
Synchronwort erkannt werden, um daraus die Synchronisierung für
den Rahmen zu gewinnen. Sie dienen außerdem dazu, die angedeutete Phasenvierdeutigkeit auf der Empfängerseite aufzuheben und die richtige Zuordnung der Datenströme der beiden Kanäle A und B zu den Inhalten der Sendekanäle I,Q zu gewährleisten. Im folgenden werden die Datenströme der Kanäle A,B bzw. die Inhalte der Sendekanäle I,Q abgekürzt Kanal A,B,I,Q genannt.

Fig. 3 zeigt die verschiedenen Kriterien für die Feststellung der Anwesenheit eines Synchronwortes gemäß Fig. 1,2. Die Anwesenheit eines Sychrnonwortes wird nur dann festgestellt, wenn insgesamt die folgenden fünf Kriterien in der empfangenen Signalfolge erfüllt sind.

1. Im Kanal A müssen mindestens vier aufeinanderfolgende Bits mit gleicher Polarität vorliegen, im dargestellten Beispiel 0000. Dieses Auswert-Kriterium ist durch die Leitung a symbolisch dargestellt.

2. Im Kanal B müssen gleichzeitig ebenfalls vier aufeinanderfolgende Bits die gleiche Polarität haben (in Fig. 3 0000). Die Polarität kann dabei in den Kanälen A und B entsprechend den Kombinationsmöglichkeiten gemäß Fig. 2 unterschiedlich sein. Dieses Auswertkriterium ist durch die Leitung b symbolisch dargestellt.

3. Es muß gleichzeitig in beiden Kanälen A und B ein Polaritätswechsel in der Bitfolge stattfinden, in Fig. 3 von 0 auf 1. Dieses Kriterium ist durch die Leitung c dargestellt.

4. Nach dem Polaritätswechsel in der Mitte des Bitwortes müssen im Kanal A wiederum vier Bits mit gleicher Polarität erscheinen, nämlich 1111. Dieses ist durch die Leitung d dargestellt.

5. Im Kanal B müssen nach dem Polaritätswechsel ebenfalls
   wieder vier Bits mit gleicher Polarität erscheinen (in Fig.
   3 1111). Dieses Kriterium ist durch die Leitung e dargestellt.

Nur wenn alle diese Kriterien a,b,c,d,e erfüllt sind, wird
in der Erkennungs- und Kanalzuordnungsschaltung E das Vorhandensein eines Synchronwortes registriert. Dadurch ist
die Schaltung E in der Lage, einen definierten Punkt eines
Rahmens gemäß Fig. 1 festzulegen und damit die zeitselektive
Auswertung des jeweils gewünschten Programms innerhalb eines
Rahmens zu ermöglichen, z.B. die Auswahl des Programms mit
den Signalen L2,R2 gemäß Fig. 1. Die Schaltung E wertet
außerdem aus, in welcher Weise die je nach Empfang der Kombinationen Nr. $f, g, h, i$ gemäß Fig. 2 die empfangenen Signale
invertiert und/oder vertauscht werden müssen, damit sie die
richtige Zuordnung zu den weitergehenden Kanälen I,Q auf der
Empfängerseite haben. Im Kanal A müßte zur Erzielung der Bitfolge gemäß der Kombination $f$ bei Empfang der Kombination
$g$ und $h$ jeweils eine Invertierung erfolgen.

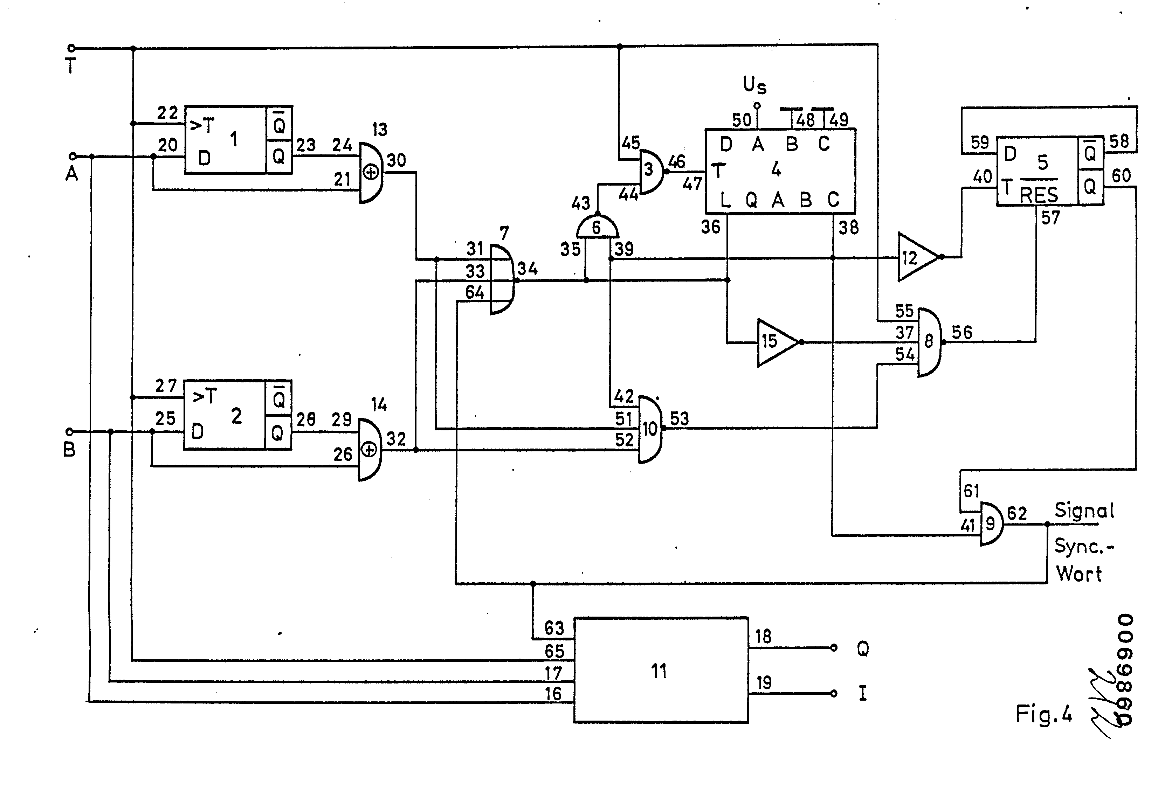

Fig. 4 zeigt ein Schaltungsbeispiel für die Auswertung des erfindungsgemäßen Synchronwortes. Der Kanal A führt auf den D-
Eingang 20 eines Flip-Flops 1, den Eingang 21 eines Exclusiv-
ODER-Gatters 13 und den Eingang 16 einer Kanalzuordnungsschaltung 11. Auf den T-Eingang des Flip-Flops 1 führt der Systemtakt T. Der Q-Ausgang 23 des Flip-Flops 1 ist mit dem Eingang
24 des Exclusiv-ODER-Gatters 13 verbunden. Der Kanal B führt
auf den D-Eingang 25 eines Flip-Flops 2, den Eingang 26 eines
Exclusiv-Gatters 14 und den Eingang 17 der Kanalzuordnungsschaltung 11. Auf den T-Eingang 27 des Flip-Flops 2 führt der Systemtakt T. Der Q-Ausgang 28 des Flip-Flops 2 ist mit dem Eingang
29 des Exclusiv-ODER-Gatters 14 verbunden. Der Ausgang 30 des
Exclusiv-ODER-Gatters 13 führt auf den Eingang 31 eines NOR-
Gatters 7. Der Ausgang 32 des Exclusiv-ODER-Gatters 14 führt auf einen weiteren Eingang 33 des NOR-Gatters 7. Der Ausgang
34 des NOR-Gatters 7 ist mit dem Eingang 35 eines NAND-Gatters
6, dem L-Eingang 36 eines dreistufigen Binärzählers 4 und
über einen Inverter 15 mit dem Eingang 37 eines NAND-Gatters
8 verbunden. Der C-Ausgang 38 des Binärzählers 4 ist mit
einem weiteren Eingang 39 des NAND-Gatters 6, weiterhin über
einen Inverter 12 mit dem T-Eingang 40 eines Flip-Flops 5, mit
dem Eingang 41 eines AND-Gatters 9 und mit dem Eingang 42
eines NAND-Gatters 10 verbunden. Der Ausgang 43 des NAND-Gatters 6 führt auf den Eingang 44 eines NAND-Gatters 3. Der
zweite Eingang 45 des NAND-Gatters 3 ist mit dem Systemtakt T
verbunden. Der Ausgang 46 des NAND-Gatters 3 führt auf den T-
Eingang 47 des Binärzählers 4. Die B- und C-Eingänge 48 und 49
des Binärzählers 4 liegen auf Bezugspotential. Der Eingang 50
liegt an einer Festspannung U5. Die Ausgänge 30 bzw. 32 der
Exclusiv-ODER-Gatter 13 bzw. 14 führen auf die Eingänge 51, bzw.
52 des NAND-Gatters 10. Der Ausgang 53 des NAND-Gatters 10 führt
auf einen weiteren Eingang 54 des NAND-Gatters 8, das mit einem
weiteren Eingang 55 mit dem Systemtakt T verbunden ist. Der
Ausgang 56 des NAND-Gatters 8 ist mit dem $\overline{RES}$-Eingang 57 des
Flip-Flops 5 verbunden. Der $\overline{Q}$-Ausgang 58 des Flip-Flops 5 führt
auf den D-Eingang 59 des Flip-Flops 5. Der Q-Ausgang 60 des Flip-
Flops 5 führt auf den Eingang 61 des AND-Gatters 9. Am Ausgang
62 des AND-Gatters 9 liegt das Sychronwort-Signal an, das mit
dem Eingang 63 der Kanalzuordnungsschaltung 11 und einem weiteren Eingang 64 des NOR-Gatters 7 verbunden ist. Der Eingang
65 der Kanalzuordnungsschaltung 11 ist mit dem Systemtakt T verbunden. Am Ausgang 18 der Kanalzuordnungsschaltung 11 ist der
Kanal Q, am Ausgang 19 der Kanal I abgreifbar.

Aus einem ankommenden Signal werden zwei Kanäle A und B und
ein Systemtakt T erstellt. Eine Verarbeitung der Kanäle ist
nur dann richtig möglich, wenn diese erzeugten Kanäle A und B
mit den erwarteten Kanälen I und Q in Lage und Phase identisch
sind. Lage und Phase werden durch zwei Synchronhalbworte, die
den Datenkanälen A und B vorangestellt sind, ermittelt und in einer geeigneten Schaltung zur Umordnung und/oder Invertierung verwertet. Aus den ankommenden Daten muß das Synchronhalb der wort) Kanäle A und B, wie es in Fig. 2 beschrieben ist, erkannt werden. Außerdem müssen Daten parallel verarbeitet werden.

Die Erkennung, ob ein Wechsel stattgefunden hat, wird durch ein Flip-Flop 1 und ein nachgeschaltetes Exclusiv-ODER-Gatter 13 für den Kanal A vorgenommen. Für den Kanal B geschieht dies durch ein Flip-Flop 2 und ein Exclusiv-ODER-Gatter 14. Die Flip-Flops 1 bzw. 2 haben zur Aufgabe, gesteuert durch den Systemtakt T, das Signal der Kanäle A,B um je ein Bit zu verzögern. Tritt ein Polaritätswechsel in den Kanälen A und/oder B auf, so haben die Eingänge 20 und 22, bzw. 26 und 29 des Exclusiv-ODER-Gatters 13 bzw. 14 ungleiche Pegel, und am Ausgang 30, 32 des Exclusiv-ODER-Gatters 13,14 tritt eine logische "1" auf. Bei einem Wechsel der Polarität der Kanäle A und/oder B liegt am Ausgang 34 des NOR-Gatters 7 eine logische "0". Dadurch wird der L-Eingang 36 des dreistufigen Binärzählers 4 veranlaßt, den Binärzähler 4 mit einem Wert "eins" zu laden. Nach erfolgtem Wechsel der Polarität im Synchronwort liegt um ein Bit verzögert am L-Eingang 36 des Binärzählers 4 eine logische "1". Dieses Signal veranlaßt den Binärzähler 4, den ankommenden Systemtakt T zu zählen. Hat der Binärzähler 4 vier Takte gezählt, ohne daß er durch einen Wechsel der Polariät des Signals wieder neu geladen wurde, liegt am C-Ausgang 38 des Binärzählers 4 eine logische "1" an. In diesem Fall wird durch das Signal am Ausgang 43 des NAND-Gatters 6 der Systemtakt T gesperrt.

Findet jetzt ein Wechsel in der Polarität der ankommenden Bits statt, wird der Binärzähler 4 erneut mit einem Wert "eins" geladen. Am C-Ausgang 38 des Binärzählers 4 liegt dann eine logische "0" an. Dieser Wechsel am C-Ausgang 38 des Binärzählers 4 von einer logischen "1" zu einer logischen "0" hat zur Folge, daß über den Inverter 12 ein Flip-Flop 5 gesetzt wird. Das gesetzte Flip-Flop 5 kennzeichnet damit, daß die erste Hälfte eines möglichen Synchronwortes vorhanden ist. Am Q-Ausgang 60
des Flip-Flops 5 liegt dann eine logische "eins". Findet ein
vorzeitiger Wechsel der Polarität der Kanäle A und/oder B
statt, d.h. folgen weniger als vier gleichwertige Bits aufeinander, wird das Flip-Flop 5 über den $\overline{RES}$-Eingang 57 zurückgesetzt.

Findet kein vorzeitiger Polaritätswechsel statt, d.h. zählt der
Binärzähler 4 weitere vier Bits, so liegt am C-Ausgang 38 des
Binärzählers 4 wiederum eine logische "1". Am Ausgang 62 des
AND-Gatters 9 liegt jetzt die Information, daß ein Synchronwort gefunden wurde, in Form einer logischen "1" vor.

Die Kanäle A+B und der Systemtakt T sind gleichzeitig Eingänge
16,17,63,65 der Kanalzuordnungsschaltung 11. Das Synchronwortsignal, der Systemtakt T und das jeweils letzte Bit der Kanäle
A+B liefern eine Zuordnung zu den Kanälen I und Q. Gleichzeitig
werden die Kanäle A und B auf die Kanäle I und Q durchgeschaltet.

Das Synchronwort muß nicht unbedingt in zwei Hälften auf die
Kanäle A und B aufgeteilt werden. Die beiden Teile (Synchronwort) können eine
unterschiedliche Anzahl an Bits aufweisen, z.B. für Kanal A
ist der Synchronwortteil zwölf Bits lang, für Kanal B vier Bits
lang.

Patentansprüche

1. Digitales Signalübertragungssystem, insbesondere für Satellitenrundfunk, bei dem über zwei simultane Übertragungskanäle (A,B) jeweils innerhalb eines Rahmens Datenfolgen zeitlich nacheinander und zu Beginn eines Rahmens ein Synchronwort mit mehreren Bit übertragen werden, gekennzeichnet durch folgende Merkmale:

a) In beiden Kanälen wird gleichzeitig die halbe Stellenzahl des Synchronwortes übertragen.

b) Je ein Synchronhalbwort enthält $2^n$ aufeinanderfolgende Bits der gleichen, ersten Polarität (0) und darauffolgend $2^n$ aufeinanderfolgende Bits der gleichen, zweiten Polarität (1).

c) Die Erkennung eines Synchronwortes im Empfänger erfolgt, wenn in jedem der beiden Kanäle (A,B) $2^n$ aufeinanderfolgende Bits gleicher Polarität erscheinen und in beiden Kanälen (A,B) gleichzeitig eine Polaritätsumkehr der Bits erfolgt und darauffolgend in jedem der beiden Kanäle wieder $2^n$ Bits gleicher Polarität erscheinen.

2. Empfänger für ein System nach Anspruch 1, dadurch gekennzeichnet, daß zur Erkennung der Polaritätsumkehr die Bitfolge einmal direkt und einmal um eine Bitdauer verzögert einem Gatter (13,14) zugeführt sind.

3. Empfänger nach Anspruch 2, dadurch gekennzeichnet, daß das Gatter ein Exclusiv-ODER-Gatter (13,14) ist.

4. Empfänger für ein System nach Anspruch 1, dadurch gekennzeichnet, daß ein (n+1)-stufiger Binärzähler (4) bei jedem Polaritätswechsel in einer der beiden Bitfolgen der beiden Kanäle (A,B) mit der zwischen den kürzesten Polaritätswechseln liegenden Flanke des Systemtaktes (T) auf den Wert "$2^0$" geladen wird und dann ein Aufwärtszählen der folgenden Systemtaktimpulse durchgeführt, und daß die Sperrung der Zählung dann erfolgt, wenn ohne Auftreten eines Polaritätswechsels der Zählerstand "$2^n$" erreicht ist.


5.  Empfänger nach Anspruch 4, dadurch gekennzeichnet, daß der
    folgende Polaritätswechsel über ein Gatter (7) dem Zähler
    (4) auf den Zählzustand "$2^o$" stellt und gleichzeitig einen
    Speicher (5) auf logisch "1" setzt.


6.  Empfänger nach Anspruch 4, dadurch gekennzeichnet, daß bei
    nicht gleichzeitigem Polaritätswechsel des Synchronhalbwertes der zwei Kanäle (A,B) und bei einem Zählerstand des
    Zählers (4) $2^n$ der Speicher (5) zurückgesetzt wird.


7.  Empfänger nach Anspruch 5, dadurch gekennzeichnet, daß ein
    Weiterzählen des Zählers (4) bis "$2^n$" über ein Gatter (9)
    ein die Anwesenheit eines Synchronwortes anzeigendes Signal
    auslöst.


8.  Empfänger nach Anspruch 1, dadurch gekennzeichnet, daß bei
    Auftreten des Signales, daß das Synchronwort anzeigt, aus
    den in den Übertragungskanälen (A,B) anstehenden Bits auf
    die Phasenlage der Bitströme der Kanäle (A,B) geschlossen
    wird und gleichzeitig die Kanäle (A,B) auf die Kanäle (I,Q)
    in richtiger Phasenlage geschaltet werden.


9.  Empfänger nach Anspruch 1, dadurch gekennzeichnet, daß das
    Synchronhalbwort $2^n=4$ aufeinanderfolgender Bits der gleichen, ersten Polarität (0) und darauffolgender $2^n=4$ auf-
    einanderfolgender Bits der gleichen, zweiten Polarität (1)
    enthält.

112

```
0 0 0 0 1 1 1 1
0 0 0 0 1 1 1 1
```

|←——————— Rahmen ——————— — — — —

Kanal A  | Sync. | L1 | R1 | L2 | R2 | — — —

Kanal B  | Sync. | L9 | R9 | L10 | R10 | — — —

→ t

t₀

**Fig.1**

| Kombination Nr. | Kanal A | Kanal B | Ausgangszuordnung Kanal I | Kanal Q |
|---|---|---|---|---|
| f | 0 0 0 0 1 1 1 1 | 0 0 0 0 1 1 1 1 | A | B |
| g | 1 1 1 1 0 0 0 0 | 0 0 0 0 1 1 1 1 | B | $\overline{A}$ |
| h | 0 0 0 0 1 1 1 1 | 1 1 1 1 0 0 0 0 | $\overline{B}$ | A |
| i | 1 1 1 1 0 0 0 0 | 1 1 1 1 0 0 0 0 | $\overline{A}$ | $\overline{B}$ |

**Fig. 2**

„4 gleiche Bit"

E

a

A  `0 0 0 0 1 1 1 1`

d

e

B  `0 0 0 0 1 1 1 1`

b

c

Synchronwort –
Erkennung
+ Kanal –
zuordnungs –
Schaltung

.I

Q

„Sprung"

**Fig.3**

Fig.4

Europäisches
Patentamt

**EUROPÄISCHER RECHERCHENBERICHT**

**0069860**
Nummer der Anmeldung

EP  82 10 4968

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 736 507  (C.J.WOLEJSZA et al.) <br> *Spalte 5, Zeile 3 - Spalte 6, Zeile 16; Figuren 4a, 4b* & DE 2149552 | 1,8 | H 04 H    1/00 <br> H 04 L    5/12 <br> H 04 L   27/22 |
| A | PROCEEDINGS OF THE INTERNATIONAL CONFERENCE ON NEW SYSTEMS AND SERVICES IN TELECOMMUNICATIONS, Lüttich, (BE) 1980, North-Holland Publishing Company, Amsterdam 1981 <br> D. POMMIER: "Diffusion numérique dans un canal de radiodiffusion par satellite", Seiten 191-201 <br> *Seite 194, rechte Spalte, Absatz 3.4; Figur 3* | 1 | |
| A | FR-E- 78 819  (LE MATERIEL TELEPHONIQUE) <br> *Seite 2, rechte Spalte, letzter Absatz - Seite 3, Absatz 3* | 1 | RECHERCHIERTE SACHGEBIETE (Int. Cl. ³) |
| A | FR-A-2 217 876  (PHILIPS) <br> *Seite 4, Zeile 12  - Seite 5, Zeile 35* &  DE 2 403 098 | 1 | H 04 H    1/00 <br> H 04 H    5/00 <br> H 04 J    3/06 <br> H 04 L    5/12 <br> H 04 L   27/18 <br> H 04 L   27/22 |
| A | US-A-3 916 324  (SHUDA) <br> *Spalte 3, Zeile 56 - Spalte 4, Zeile 3; Figur 2* | 2,3 | |

Der vorliegende Recherchenbericht wurde für alle Patentansprüche erstellt.

| Recherchenort | Abschlußdatum der Recherche | Prüfer |
|---|---|---|
| DEN HAAG | 14-10-1982 | STRASSEN  TH.W. |